(19) Europäisches Patentamt
European Patent Office
Office européen des brevets

(11) Veröffentlichungsnummer : **0 056 578**
**B1**

(12) **EUROPÄISCHE PATENTSCHRIFT**

(45) Veröffentlichungstag der Patentschrift : **21.03.84**

(51) Int. Cl.³ : **C 09 B 41/00**, C 09 B 44/04, C 09 B 67/34, C 09 B 67/54

(21) Anmeldenummer : **82100042.9**

(22) Anmeldetag : **07.01.82**

(54) **Verfahren zur Herstellung von Lösungen kationischer Azofarbstoffe.**

(30) Priorität : **16.01.81 DE 3101140**

(43) Veröffentlichungstag der Anmeldung : **28.07.82 Patentblatt 82/30**

(45) Bekanntmachung des Hinweises auf die Patenterteilung : **21.03.84 Patentblatt 84/12**

(84) Benannte Vertragsstaaten : **BE CH DE FR GB IT LI**

(56) Entgegenhaltungen :
**BE-A- 744 495**
**DE-A- 2 139 311**
**DE-A- 2 350 867**
**FR-A- 2 219 204**
**FR-A- 2 289 579**
**FR-A- 2 299 381**
**GB-A- 2 009 208**

(73) Patentinhaber : **BAYER AG**
**Konzernverwaltung RP Patentabteilung**
**D-5090 Leverkusen 1 Bayerwerk (DE)**

(72) Erfinder : **Linhart, Karl, Dr.**
**Heymannstrasse 65**
**D-5090 Leverkusen 1 (DE)**
Erfinder : **Gleinig, Harald, Dr.**
**Eichholzer Weg 100**
**D-5068 Odenthal (DE)**
Erfinder : **Boehmke, Günter, Dr.**
**Kurt-Schumacher-Ring 152**
**D-5090 Leverkusen 1 (DE)**

**EP 0 056 578 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

Verfahren zur Herstellung von Lösungen kationischer Azofarbstoffe

Die vorliegende Erfindung betrifft ein Verfahren zur Herstellung konzentrierter, salzarmer, stabiler Lösungen kationischer Azofarbstoffe der Formel

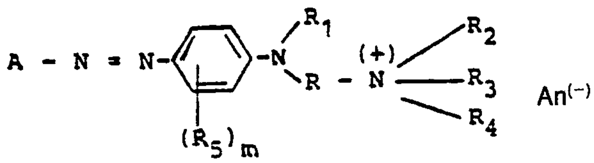 (I)

worin

A den Rest einer aromatisch-carbocyclischen oder aromatisch-heterocyclischen Diazokomponente,
R Alkylen,
$R_1$ Wasserstoff oder Alkyl,
$R_2$ Alkyl, Alkenyl oder Aralkyl,
$R_3$ Alkyl,
$R_4$ Hydroxyalkyl mit 2 oder mehr C-Atomen,
$R_5$ Halogen, Alkyl, Alkoxy, Aryloxy, Acyl oder Acylamino,
m 0, 1, 2, 3 oder 4 und
$An^-$ ein Carboxylat-Ion bedeuten, und worin die cyclischen und acyclischen Substituenten weitere nichtionische Substituenten tragen können, durch Umsetzung von Aminen der Formel

$$A—NH_2 \quad (II)$$

mit Kupplungskomponenten der Formel

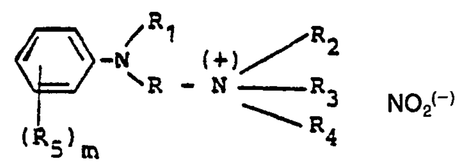 (III)

in wäßrigen Carbonsäuren und gegebenenfalls organischen wasserlöslichen Lösungsmitteln.

Die auf diese Weise hergestellten Lösungen enthalten vorzugsweise

10-60 Gew.-% des kationischen Farbstoffes,
10-80 Gew.-% einer wasserlöslichen Carbonsäure,
0-20 Gew.-% eines wasserlöslichen organischen Lösungsmittels
und
3-30 Gew.-% Wasser.

Von den Farbstoffen der Formel (I) sind solche hervorzuheben, deren Diazokomponente A einen Rest der Benzol-, Thiazol-, Benzthiazol-, Benzisothiazol-, Thiadiazol- oder Triazol-Reihe darstellt.

Nichtionische Substituenten der Farbstoffe I sind die in der Farbstoffchemie üblichen, unter den Herstellungs- und Anwendungsbedingungen nicht dissoziierenden Substituenten wie Cyan, Hydroxy, Halogen, wie Fluor, Chlor oder Brom, Nitro, Alkyl, Mono- und Dialkylamino, Phenyl, Alkoxy, Acyloxy, Alkoxycarbonyl, Alkoxycarbonyloxy, Phenoxy, Benzyloxy, Sulfonamido, Carbonamido, Alkylsulfonyl, Phenylsulfonyl, Alkylmercapto oder Phenylmercapto.

Besonders geeignete Alkylreste sind solche mit 1-4 C-Atomen.

Besonders geeignete Reste $R_4$ sind unsubstituierte und durch $C_1$-$C_4$-Alkoxy, $C_2$-$C_4$-Alkenyloxy, Phenoxy oder Benzyloxy substituierte 2-Hydroxy-ethyl-propyl- und -butylreste.

Geeignete Reste R sind z. B. geradkettige und verzweigte Alkylenreste mit 2-5 C-Atomen, die substituiert sein können ; z. B. kann eine Methylengruppe durch eine Carbonylgruppe ersetzt sein.

Geeignete Arylreste sind insbesondere gegebenenfalls substituierte Phenyl- und Naphthylreste.

Geeignete Acylreste sind insbesondere Alkylcarbonyl- und Alkylsulfonylreste mit 1-4 C-Atomen im Alkylrest oder Benzoyl.

Auf diese Weise bevorzugt herstellbare Farbstoffe besitzen die Formeln

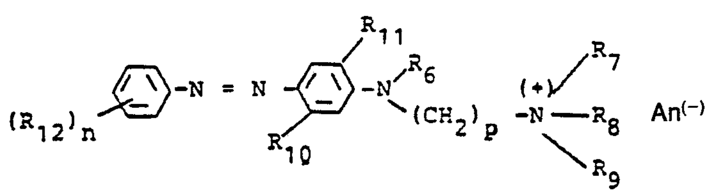 (IV)

worin

$R_6$, $R_7$, $R_8$ und $R_9$ Methyl, Ethyl, Propyl oder Butyl, 2-Hydroxyethyl, 2-Hydroxypropyl, 2-Hydroxybutyl, 2-Hydroxyethylphenyl, 2-Hydroxy-3-methoxy-propyl, 2-Hydroxy-3-chlor-propyl, 2-Hydroxy-3-ethoxy-propyl, 2-Hydroxy-3-propoxy-propyl, 2-Hydroxy-3-allyloxy-propyl, 2-Hydroxy-3-butoxy-propyl, 2-Hydroxy-3-phenoxypropyl, 2-Hydroxy-3-benzoxy-propyl,

$R_{10}$ Wasserstoff, Methyl, Ethyl, Propyl, Butyl, Halogen, Methoxy, Ethoxy, Propoxy, Acetyl-, Propionyl- oder Methylsulfonylamino,

$R_{11}$ Wasserstoff, Methyl, Ethyl, Propyl, Butyl, Halogen, Methoxy, Ethoxy oder Propoxy,

$R_{12}$ Methyl, Ethyl, Propyl, Butyl, Halogen, Cyan, Nitro, Methoxy, Ethoxy, Propoxy, Methoxy- oder Ethoxycarbonyl, Acetyloxy, Acetyl, Sulfonamido oder Carbonamido,

n 1 bis 5,

P 2 oder 3 und

$An^-$ ein Carboxylat-Ion bedeuten, und

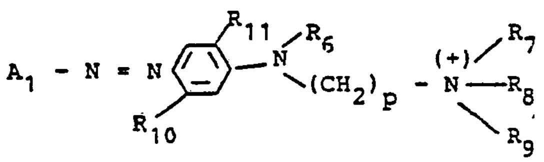 $An^{(-)}$ (V)

worin $A_1$ für Reste der Formeln

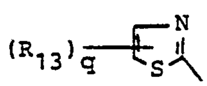 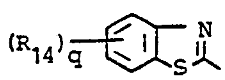 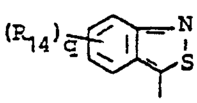

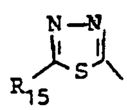 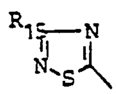 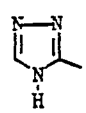

steht, in denen

$R_{13}$ $C_1$-$C_5$-Alkyl, Phenyl, Cyan, Nitro oder Carbomethoxy,

$R_{14}$ $C_1$-$C_5$-Alkyl, $C_1$-$C_4$-Alkoxy, Phenoxy, Nitro, Carbomethoxy oder Halogen

$R_{15}$ Wasserstoff ; $C_1$-$C_5$-Alkyl ; $C_1$-$C_4$-Alkoxy ; Phenoxy ; Cyclohexyl ; Phenyl ; durch Methyl, Ethyl, Methoxy, Ethoxy, Nitro, Chlor oder Acetylamino substituiertes Phenyl ; Benzyl ; Methyl-, Ethyl- oder Phenyl-mercapto, Benzyl-mercapto ; Dimethyl- oder Diethylamino oder Methyl-, Ethyl- oder Phenylsulfonyl,

q 0, 1 oder 2 bedeuten, und worin $R_6$-$R_{11}$, p und $An^-$ die in Formel IV angegebene Bedeutung haben.

Von diesen Farbstoffen sind solche bevorzugt, in denen n 1-3, q 0 oder 1, $R_6$, $R_7$ und $R_8$ Methyl oder Ethyl, $R_9$ 2-Hydroxypropyl, $R_{10}$ und $R_{11}$ Wasserstoff oder Methyl, $R_{12}$ Chlor, Brom, Cyan oder Nitro, $R_{13}$, $R_{14}$ und $R_{15}$ Wasserstoff, Phenyl oder Nitro und $An^-$ Acetat bedeuten.

Geeignete Amine II, geeignete Kupplungskomponenten III und geeignete Amine der Formel

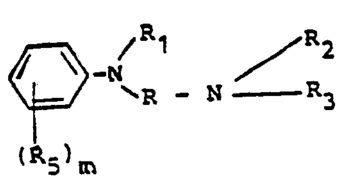 (VI)

die durch Alkoxylierung in die Kupplungskomponenten III überführt werden können, werden in der US-PS 4 036 826 beschrieben.

Als wasserlösliche Carbonsäuren kommen insbesondere $C_1$-$C_3$-Carbonsäuren wie Ameisen-, Essig-, Propion- und Mono-, Di- und Trichloressigsäure und Milchsäure, bevorzugt Essigsäure und Propionsäure in Betracht.

Beispiele für organische wasserlösliche Lösungsmittel sind Alkohole wie Ethanol, iso-Propanol, iso- und n-Butanol, Glykole wie Ethylenglykol, Propylenglykol, Ethylendi- und triglykol, Mono- und Dialkylglykolether wie Methyl- und Dimethylglykol, Dimethyl-formamid, Caprolactam und Methylpyrrolidon.

Das Verfahren wird bevorzugt in der Weise durchgeführt, daß das Amin II in der wäßrigen Carbonsäure, gegebenenfalls unter Zusatz des organischen Lösungsmittels suspendiert bzw. gelöst wird und auf beispielsweise 0-50 °C gekühlt wird. Unter Zugabe der Kupplungs-komponente III wird dann die gleichzeitige Diazotierung und Kupplung bei 0-50 °C, insbesondere bei Raumtemperatur durchgeführt. Nach beendeter Reaktion wird bei Temperaturen unter 50 °C nachgerührt.

Eine weitere Variante des Verfahrens besteht in der Möglichkeit der Mischung verschiedener Diazokomponenten II und einer Kupplungskomponente III, die zusammen diazotiert und gekuppelt werden, um eine fertige Farbstofflösung mit dem gewünschten Farbton zu erhalten.

Das erfindungsgemäße Verfahren bietet die überraschende Möglichkeit der Herstellung hochkonzentrierter, stabiler Lösungen kationischer Farbstoffe, deren physikalische Stabilität durch die Abwesenheit von anorganischen Salzen gewährleistet ist. Die auf sehr einfache Weise hergestellten Lösungen können ohne weitere Reinigung in den Handel gebracht werden.

Trotz der fehlenden Zwischenisolierung der Farbstoffe, die im allgemeinen zur Entfernung von nichtgekuppelten Zwischenprodukten oder Zersetzungsprodukten dient, werden einwandfreie Färberesultate erzielt, die in Ton und Echtheiten dem Standard nicht nachstehen, der mit den nach bisherigen Verfahren gereinigten Farbstoffen erzielt wird.

Dem Stand der Technik war nicht zu entnehmen, daß die simultane Diazotierung und Kupplung in hoher Konzentration ohne die Bildung von Zersetzungsprodukten in Carbonsäuren möglich ist. Außerdem liegt bisher keine brauchbare Lösung für die Entfernung des durch das Nitrit eingeschleppte Kations des Nitrosierungsmittels vor. Die bekannte Verwendung von Salpetrigsäureestern stellen nur mit großem technischem Aufwand zu lösende Verfahren dar.

Nach dem erfindungsgemäßen Verfahren wird das Nitrit-Ion als Anion der kationischen Kupplungskomponente in die Reaktionslösung eingebracht. Es war nach dem Stand der Technik nicht vorherschaubar, daß das Nitrit der Kupplungskomponente ohne Nebenreaktionen zu geben (z. B. p-Nitrosierung) isoliert und zur gewünschten Reaktion geführt werden konnte.

Im Gegensatz zu den bekannten Salpetrigsäureestern sind die Salze der Kupplungskomponente leicht durch Ionenaustauschreaktionen zugänglich. Zusätzlich ist ihre Handhabung nicht mit dem Risiko der Salpetrigsäureester behaftet, sondern dem der Natriumnitrit-Lösung vergleichbar. Besonders stabil sind die erfindungsgemäßen Nitrit-Lösungen, wenn sie mit geeigneten Basen neutral gestellt werden, z. B. mit NaOH, KOH oder bevorzugt organischen Basen wie Triethanolamin.

Durch die Auswahl der Kupplungskomponente als salpetrige Säure liefernde Substanz und des Lösungsmittels werden Bedingungen gefunden, die gleichzeitig eine quantitative Umsetzung zum Farbstoff und nahezu von anorganischen Salzen freie Farbstofflösung ergeben. Bei Variation nur eines der genannten Parameter können diese Vorteile nicht erzielt werden.

Die Farbstoffe der erfindungsgemäß herstellbaren Lösungen sind z. B. aus US-A 4 036 826 und DE-A 1 644 323 bekannt : Sie eignen sich bekanntermaßen zum Färben und Bedrucken von Fasern, Geweben und Vliesen aus Polymerisaten aus Acrylnitril oder 1,1-Dicyanethylen oder Mischpolymerisaten dieser Komponenten mit anderen Vinylverbindungen, wie Vinylchlorid, Vinylidenchlorid, Vinylacetat, Vinylpyridin, Vinylimidazol, Acrylsäure- und Methacrylsäureestern ; aus sauer modifizierten Polyestern, wie sie beispiels-weise in den US-A 2 893 816, 3 018 272 und 3 166 531 beschrieben sind, und aus sauer modifizierten Polyamiden, wie sie beispiels-weise in den US-A 3 039 009 und 3 454 351 beschrieben sind.

Außerdem lassen sich mit diesen Farbstoffen auch Cellulosefasern und ligninhaltige Faserstoffe, wie sie zur Herstellung von Vliesen, saugfähigen Papieren, geleimten Schreib- und packpapieren verwendet werden, hervorragend lichtecht anfärben. Besonders überraschend ist das gute Aufziehverhalten der Farbstoffe, die auch bei den in der Papierherstellung üblichen Flottenverhältnissen von 1 : 100-1 000 vollständig aufziehen und ein nahezu farbloses Abwasser ergeben.

Es ist bekannt, daß bestimmte Azofarbstoffe nach einstufigen Diazotierungs-Kupplungsverfahren hergestellt werden können.

In der US-A 2 478 768 wird ein einstufiges Verfahren zur Herstellung von wasserunlöslichen Pigmenten beschrieben, in dem Diazotierung und Kupplung bei einem pH-Wert $< 6$ durchgeführt werden. Dabei werden wasserunlösliche Ba-Salze der Azofarbstoffe durch ständige Ausfällung weiteren Nebenreaktionen entzogen. Ein ähnliches Verfahren wird in US-A 2 478 767 beschrieben, bei dem Diazotierung und Kupplung im pH-Bereich zwischen pH 6,0-7,2 gehalten wird.

US-A 2 418 416 beschreibt ein Verfahren, bei dem die Diazotierung bei pH $< 4$ und die Kupplung bei pH $> 4$ erfolgt. Ein solches Verfahren kann zur Zersetzung eines Teils der Diazoverbindung vor der Kupplung führen.

DE-A 1 927 453 beschreibt ein Verfahren zur Herstellung von metallfreien Azopigmenten durch Diazotierung und Kupplung in organischen Lösungsmitteln, die höchstens 10 % Wasser enthalten. Dieses Verfahren verläuft in heterogener Phase.

DE-A 2 058 299 beschreibt ein ähnliches Verfahren mit dem Unterschied, daß das Reaktionsgemisch wasserfrei ist und eine organische Säure mit einem pH-Wert $< 3$ in einer Menge $< 1$ Mol bezogen auf 1 Mol Amin zugesetzt wird. Durch die Reaktionsführung in wasserfreiem Medium ist es notwendig, die

Ester der salpetrigen Säure einzusetzen. Diese müssen gesondert hergestellt werden und unter größten Vorsichtsmaßnahmen gehandhabt werden, während die Lösungen der Nitrite der Kupplungskomponenten, ähnlich wie Natriumnitrit-Lösungen, gefahrlos sind.

DE-B 2 139 311 beschreibt ein Verfahren zur einstufigen Herstellung von Azofarbstoffen, wobei der pH-Wert für Diazotierung und Kupplung bei 4 oder niedriger liegt, wenn das Reaktionsgemisch mit 25 % seines Volumens an Wasser verdünnt wird. Die Beispiele arbeiten mit Mengen von 17-127 Mol Essigsäure auf 1 Mol Amin, wodurch diese Verfahren zur Herstellung von konzentrierten Flüssigmarken nicht brauchbar sind.

GB-A 2 009 208 A beschreibt die gleichzeitige Diazotierung und Kupplung von durch Pyridiniumchlorid substituierten Kupplungskomponenten in Essigsäure und Ethylenglykol bei pH-Wert von 2,8, wenn das Reaktionsgemisch mit 25 % Wasser verdünnt wird. Eine Abtrennung der anorganischen Salze durch Filtration ist nicht möglich.

In der GB-A 1 162 665 werden Diazotierung und Kupplung in saurer Lösung durchgeführt und die Farbstoffe ausgesalzen oder als $ZnCl_2$-Doppelsalz isoliert.

Bei den Prozentangaben der Einstellungen der Beispiele handelt es sich um wäßrige Einstellungen.

## Beispiel 1

479 g N-Ethyl-N-(dimethyl-hydroxy-propyl-ammonium)-ethyl-anilinsulfat (62,4 %ig) (= 1 Mol) werden vorgelegt und mit

5,5-6 g Triethanolamin auf pH 6,9-7 eingestellt. Man gibt

230 ml Natriumnitrit-Lösung (30 %ig) (= 1 Mol) hinzu und rührt kurz auf.

Ohne Rühren wartet man ca. 5 Minuten auf Phasentrennung. Die untere Phase ist farblos und klar und enthält praktisch nur Natriumsulfat. Sie wird abgelassen.

221,7 g 2-Chlor-4-nitranilin (76,25 %ig) (= 0,98 Mol),

200 g Eisessig und

97,5 g 6-Caprolactam werden in einem anderen Kolben vorgelegt und auf 8 °C abgekühlt. Innerhalb von 4 Stunden läßt man die nach den oben beschriebenen Verfahren erhaltene N-Ethyl-N-(dimethylhydroxypropylammonium)-ethyl-anilinnitrit-Lösung zulaufen. Die Temperatur wird dabei auf 8°-2 °C gehalten. Es wird über Nacht ohne Kühlung nachgerührt und am nächsten Morgen nach Abkühlung auf 2 °C geklärt (Klärpresse mit Tuch-Papier-Tuch), wobei kein nennenswerter Rückstand auftritt. Man erhält nach der Klärung eine stabile Lösung eines roten Farbstoffes der Formel

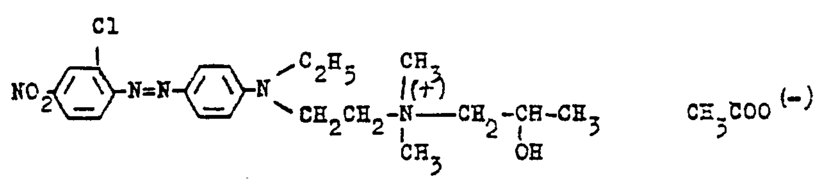

Ausbeute : 1 070 g.

## Beispiel 2

305,3 g p-Chlor-o-nitranilin (56 %ig) (= 1 Mol),

200 ml Eisessig und

97,5 g 6-Caprolactam werden in einem Kolben vorgelegt und auf 10 °C abgekühlt. Innerhalb von 4 Stunden läßt man die nach Beispiel 1 erhaltene N-Ethyl-N-(dimethyl-hydroxy-propyl-ammonium)-ethylanilin-nitrit-Lösung zulaufen. Die Temperatur darf dabei nicht über 10 °C steigen. Es wird über Nacht nachgerührt und am nächsten Morgen geklärt. Dabei entsteht kein nennenswerter Rückstand. Nach der Klärung erhält man eine gelbe Farbstofflösung.

## Beispiel 3

113,1 g o-Chlor-p-nitranilin (75 %ig) (= 0,5 Mol),

152,65 g p-Chlor-o-nitranilin (56,5 %ig) (= 0,5 Mol),

200 ml Eisessig und

97,5 g 6-Caprolactam werden in einem Kolben vorgelegt und auf 10 °C abgekühlt. Innerhalb von 4 Stunden läßt man die nach Beispiel 1 erhaltene N-Ethyl-N-(dimethyl-hydroxy-propyl-ammonium)-ethylanilin-nitrit-Lösung zulaufen. Die Temperatur darf dabei nicht über 10 °C steigen. Es wird über Nacht nachgerührt und am nächsten Morgen geklärt. Dabei entsteht kein nennenswerter Rückstand. Nach der Klärung erhält man eine orange-farbene Farbstofflösung.

Beispiel 4

260 g 2,4,5-Trichloranilin (75,5 %ig) (= 1 Mol),
200 ml Eisessig und
97,5 g 6-Caprolactam werden in einem Kolben vorgelegt und auf 10 °C abgekühlt. Innerhalb von 4 Stunden läßt man die nach Beispiel 1 erhaltene N-Ethyl-N-(dimethyl-hydroxypropyl-ammonium)-ethyl-anilin-nitrit-Lösung zulaufen. Die Temperatur darf dabei nicht über 10 °C ansteigen. Es wird über Nacht nachgerührt und am nächsten Morgen geklärt. Dabei entsteht kein nennenswerter Rückstand. Nach der Klärung erhält man eine gelbe Farbstofflösung.

Beispiel 5

84 g 3-Amino-1,2,4-triazol (= 1 Mol),
200 ml Eisessig und
97,5 g 6-Caprolactam werden in einem Kolben bei 60 °C gelöst und auf 10 °C abgekühlt. Innerhalb von 4 Stunden läßt man die nach Beispiel 1 erhaltene N-Ethyl-N-(dimethyl-hydroxy-propyl-ammonium)-ethyl-anilin-nitrit-Lösung zulaufen. Die Temperatur darf dabei nicht über 10 °C ansteigen. Es wird über Nacht nachgerührt und am nächsten Morgen geklärt. Dabei entsteht kein nennenswerter Rückstand. Es ist möglich, diese Lösung direkt weiter zu quaternieren, was zu einer deutlichen Verbesserung der Farbstärke führt. Nach der Klärung erhält man eine orange-farbene Farbstofflösung.

Beispiel 6

176 g p-Nitranilin (78,3 %ig) (= 1 Mol),
200 ml Eisessig und
100 g 6-Caprolactam werden in einem Kolben vorgelegt und auf 10 °C abgekühlt. Innerhalb von 4 Stunden läßt man die nach Beispiel 1 erhaltene N-Ethyl-N-(dimethyl-hydroxypropyl-ammonium)-ethyl-anilin-nitrit-Lösung zulaufen. Die Temperatur darf 10 °C nicht übersteigen. Es wird über Nacht nachgerührt und am nächsten Morgen geklärt. Dabei entsteht kein nennenswerter Rückstand. Nach der Klärung erhält man eine rote Farbstofflösung.

Beispiel 7

171,5 g 3-Phenyl-5-amino-1,2,4-thiadiazol (98,5 %ig) (= 1 Mol),
200 ml Eisessig und
300 g Ethylenglykol werden verrührt und auf 5 °C abgekühlt. Innerhalb von 4 Stunden läßt man die nach Beispiel 1 erhaltene N-Ethyl-N-(dimethyl-hydroxypropyl-ammonium)-ethyl-anilin-nitrit-Lösung zulaufen. Die Temperatur sollte dabei zwischen 5 und 10 °C liegen. Über Nacht wird bei Raumtemperatur nachgerührt und am nächsten Morgen geklärt. Dabei entsteht kein nennenswerter Rückstand. Nach der Klärung erhält man eine rote Farbstofflösung.

Beispiel 8

186,7 g 6-Methoxy-2-aminobenzthiazol (96,4 %ig) (= 1 Mol) und
400 ml Eisessig werden in einem Kolben vorgelegt und auf 50 °C erwärmt. Es entsteht eine klare Lösung. Anschließend kühlt man auf 15 °C ab und läßt innerhalb von 4 Stunden die nach Beispiel 1 erhaltene N-Ethyl-N-(dimethyl-hydroxypropyl-ammonium)-ethyl-anilin-nitrit-Lösung zulaufen. Es wird 60 Minuten nachgerührt und geklärt. Dabei entsteht kein nennenswerter Rückstand. Man erhält eine stabile, rote Farbstofflösung.

Es ist möglich, diese Lösung weiter zu quaternieren ; man erhält dann einen blauen Farbstoff von hoher Farbstärke. Als Quaternierungsmittel werden z. B. Dimethylsulfat oder Benzylchlorid eingesetzt.

Beispiel 9

168 g 5-Nitro-2-amino-benzonitril (97 %ig) (= 1 Mol),
800 ml Eisessig und
5 g Nonylphenol und 10 Mol Ethylenoxid werden in einem Kolben vorgelegt und bei 60 °C verrührt. Innerhalb von 2 Stunden läßt man bei 25 °C die nach Beispiel 1 erhaltene N-Ethyl-N-(dimethyl-hydroxypropyl-ammonium)-ethyl-anilin-nitrit-Lösung zulaufen. Anschließend destilliert man im Vakuum (ca. 15 mm HG-Säule) bei 22-30 °C 500 ml Essigsäure/Wasser ab und stellt danach mit
ca. 100 ml Triethanolamin den pH-Wert von 4,5 auf 6 ein. Man erhält nach Klärung eine stabile Lösung eines roten Farbstoffes.

**Ansprüche**

1. Verfahren zur Herstellung konzentrierter, salzarmer, stabiler Lösungen kationischer Azofarbstoffe der Formel

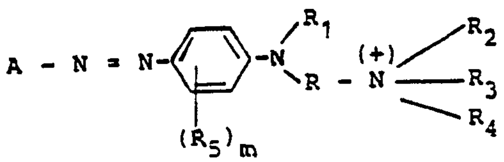 $An^{(-)}$

worin

A den Rest einer aromatisch-carbocyclischen oder aromatisch-heterocyclischen Diazokomponente,
R Alkylen,
$R_1$ Wasserstoff oder Alkyl,
$R_2$ Alkyl, Alkenyl oder Aralkyl,
$R_3$ Alkyl,
$R_4$ Hydroxyalkyl mit 2 oder mehr C-Atomen,
$R_5$ Halogen, Alkyl, Alkoxy, Aryloxy, Acyl oder Acylamino,
m 0, 1, 2, 3 oder 4 und
$An^-$ ein Carboxylat-Ion bedeuten, und worin die cyclischen und acyclischen Substituenten weitere nichtionische Substituenten tragen können, durch gleichzeitige Umsetzung von Aminen der Formel

$$A\text{—}NH_2,$$

salpetrige Säure abgebenden Substanzen und Kupplungskomponenten der Formel

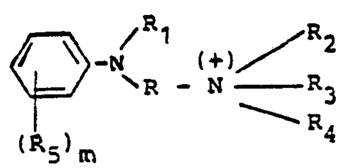 Anion

dadurch gekennzeichnet, daß man die Amine mit Verbindungen der Formel

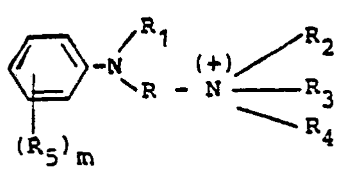 $NO_2^{(-)}$

in wäßrigen Carbonsäuren und gegebenenfalls organischen wasserlöslichen Lösungsmitteln zur Reaktion bringt.

2. Verfahren nach Anspruch 1, dadurch gekennzeichnet, daß man Lösungen herstellt, die

10-60 Gew.% des kationischen Farbstoffes,
10-80 Gew.% der wasserlöslichen Carbonsäure,
0-20 Gew.% des wasserlöslichen organischen Lösungsmittels
und
3-30 Gew.% Wasser enthalten.

3. Verfahren nach Anspruch 1, dadurch gekennzeichnet, daß die Reaktionspartner in äquimolaren Mengen eingesetzt werden.

4. Verfahren nach Anspruch 1, dadurch gekennzeichnet, daß als Carbonsäure Essigsäure und gegebenenfalls als organisches Lösungsmittel Ethylenglykol oder Caprolactam verwendet werden.

5. Verfahren nach Anspruch 1, dadurch gekennzeichnet, daß die Kupplungskomponenten durch Umsalzen aus den Quartär-Salzen anderer Säuren mit Alkali- oder Erdalkalinitriten und Abtrennen der Fremdsalze erhalten werden.

**Claims**

1. Process for the preparation of concentrated, stable solutions, with a low salt content, of cationic azo dyestuffs of the formula

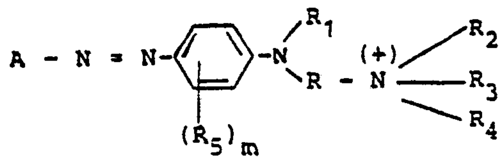 $An^{(-)}$

wherein

A denotes the radical of an aromatic carbocyclic or aromatic heterocyclic diazo component,
R denotes alkylene,
$R_1$ denotes hydrogen or alkyl,
$R_2$ denotes alkyl, alkenyl or aralkyl,
$R_3$ denotes alkyl,
$R_4$ denotes hydroxyalkyl having 2 or more C atoms,
$R_5$ denotes halogen, alkyl, alkoxy, aryloxy, acyl or acylamino,
m denotes 0, 1, 2, 3 or 4, and
$An^-$ denotes a carboxylate ion, and wherein the cyclic and acyclic substituents can carry further nonionic substituents, by simultaneously reacting amines of the formula

$$A—NH_2,$$

substances yielding nitrous acid and coupling components of the formula

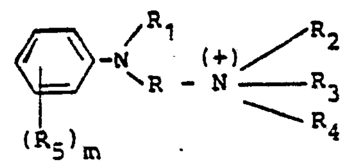 anion

characterised in that the amines are brought to reaction with compounds of the formula

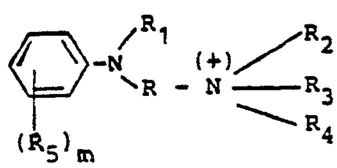 $NO_2^{(-)}$

in aqueous carboxylic acids and, if appropriate, organic water-soluble solvents.

2. Process according to Claim 1, characterised in that solutions are prepared, which contain

10-60 % by weight of the cationic dyestuff,
10-80 % by weight of the water-soluble carboxylic acid,
0-20 % by weight of the water-solbule organic solvent and
3-30 % by weight of water.

3. Process according to Claim 1, characterised in that the reactants are employed in equimolar quantities.

4. Process according to Claim 1, characterised in that acetic acid is used as the carboxylic acid and, if appropriate, ethylene glycol or caprolactam is used as the organic solvent.

5. Process according to Claim 1, characterised in that the coupling components are obtained by double decomposition of the quaternary salts of other acids with alkali metal or alkaline earth metal nitrites and separation of the foreign salts.

**Revendications**

1. Procédé de production de solutions stables concentrées, pauvres en sels, de colorants azoïques cationiques de formule

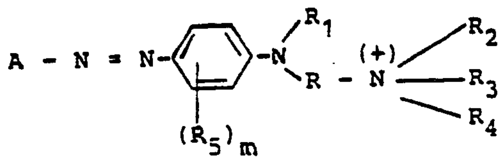 $An^{(-)}$

dans laquelle

A est le reste d'un composant diazotable aromatique carbocyclique ou aromatique-hétérocyclique,
R est un groupe alkylène,
$R_1$ est l'hydrogène ou un groupe alkyle,
$R_2$ est un groupe alkyle, alcényle ou aralkyle,
$R_3$ est un groupe alkyle,
$R_4$ est un groupe hydroxyalkyle ayant 2 ou plus de 2 atomes de carbone,
$R_5$ est un halogène ou un groupe alkyle, alkoxy, aryloxy, acyle ou acylamino,
m est égal à 0, 1, 2, 3 ou 4 et
$An^-$ désigne un ion carboxylate, et les substituants cycliques et acycliques peuvent porter d'autres substituants non ioniques, par réaction simultanée d'amines de formule

$$A—NH_2,$$

de substances cédant de l'acide nitreux et de copulants de formule

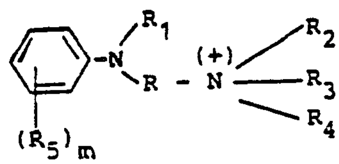 Anion

caractérisé en ce qu'on fait réagir les amines avec des composés de formule

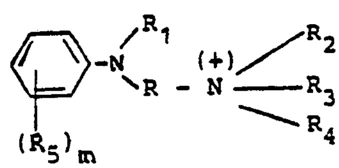 $NO_2^{(-)}$

dans des acides carboxyliques aqueux et, le cas échéant, dans des solvants organiques hydrosolubles.

2. Procédé suivant la revendication 1, caractérisé en ce qu'on prépare des solutions qui contiennent

10-60 % en poids du colorant cationique,
10-80 % en poids de l'acide carboxylique hydrosoluble,
0-20 % en poids du solvant organique hydrosoluble, et
3-30 % en poids d'eau.

3. Procédé suivant la revendication 1, caractérisé en ce que les partenaires réactionnels sont utilisés en quantités équimolaires.

4. Procédé suivant la revendication 1, caractérisé en ce qu'on utilise l'acide acétique comme acide carboxylique et, le cas échéant, l'éthylène-glycol ou le caprolactame comme solvant organique.

5. Procédé suivant la revendication 1, caractérisé en ce que les copulants sont obtenus par double décomposition entre les sels quaternaires d'autres acides et des nitrites alcalins ou alcalino-terreux et séparation des sels étrangers.